# EUROPEAN PATENT APPLICATION

(11) **EP 4 786 543 A1**
(43) Date of publication of application: **05.08.2026**
(21) Application number: 24872826.3
(22) Date of filing: 20.09.2024
(51) Int. Cl.: C08L 25/12, C08L 51/04, C08L 91/00, B29C 45/00

(54) **THERMOPLASTIC RESIN COMPOSITION AND ARTICLE MANUFACTURED USING SAME**

(30) Priority: 27.09.2023 KR 20230130991
(71) Applicant: LOTTE CHEMICAL CORPORATION, Seoul 05551 (KR)
(72) Inventor: PARK, Jungeun, Uiwang-si, Gyeonggi-do 16073 (KR); LEE, Yujin, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2024/014208
(87) International publication number: WO 2025/071118

(57) **Abstract**

The present disclosure relates to a thermoplastic resin composition comprising: a base resin comprising (A) 15 to 40 wt% of a butadiene-based rubber-modified aromatic vinyl-vinyl cyanide graft copolymer and (B) 60 to 85 wt% of an aromatic vinyl-vinyl cyanide copolymer; and (C) 0.1 to 3 parts by weight of an oil containing a triglyceride structure, based on 100 parts by weight of the base resin, and to a molded article manufactured therefrom by a Long Fiber Injection (LFI) process.

## Description

### [Technical Field]

The present disclosure relates to a thermoplastic resin composition and an article manufactured using the same, and in particular, a thermoplastic resin composition used for molding using a long fiber injection (LFI) method and a molded article manufactured by molding the composition through the LFI method are disclosed.

### [Background Art]

Styrenic resins represented by acrylonitrile-butadiene-styrene copolymer(ABS) resin are widely used in various applications due to excellent moldability, mechanical properties, appearance, secondary processability, and the like.

Molded articles manufactured using styrenic resins may be widely applied to various products requiring painting or non-painting, and for example, may be applied to various interior/exterior materials of automobiles, electronic devices, and the like.

In particular, in accordance with the trend of weight reduction of automobiles, a technology of manufacturing an extruded sheet using an ABS resin, molding the same through a Long Fiber Injection (LFI) method to increase rigidity of a molded article, and replacing a steel plate used for automobile exterior parts such as a hood is drawing attention.

However, when applying the above technology, in most cases, residual amounts or scraps of the extruded sheet remaining after manufacturing the molded article are recycled and used again as a raw material for manufacturing the extruded sheet. At this time, while undergoing repetitive high-temperature extruded sheet molding processes, a part of double bonds of the butadiene-based rubber in the ABS resin are broken and cross-linked with each other, so that it is not properly melted and dispersed during the extruded sheet molding process and remains as foreign matter on the surface of the extruded sheet, which may cause appearance defects. Conventionally, inorganic substances such as magnesium oxide (MgO) were added to prevent the occurrence of crosslinking of the butadiene-based rubber, but in this case, pin-holes caused by the inorganic substances such as magnesium oxide occurred on the surface of the molded article, so there was a problem that it was difficult to achieve excellent appearance.

Accordingly, it is necessary to provide a thermoplastic resin composition in which physical properties, appearance characteristics, and moldability are maintained excellently even after undergoing repeated molding processes, without using inorganic substances such as magnesium oxide.

### [Disclosure]

### [Technical Problem]

The present disclosure provides a thermoplastic resin composition which has excellent heat resistance, fluidity, and impact resistance, and exhibits little change in appearance and physical properties even after undergoing repeated molding processes, thereby being useful for molding using a Long Fiber Injection process, and a molded article manufactured therefrom.

### [Technical Solution]

In an embodiment, there is provided a thermoplastic resin composition comprising a base resin comprising (A) 15 to 40 wt% of a butadiene-based rubber-modified aromatic vinyl-vinyl cyanide graft copolymer and (B) 60 to 85 wt% of an aromatic vinyl-vinyl cyanide copolymer, and (C) 0.1 to 3 parts by weight of an oil containing a triglyceride structure, based on 100 parts by weight of the base resin.

The (A) butadiene-based rubber-modified aromatic vinyl-vinyl cyanide graft copolymer may have a core-shell structure comprising a core including a butadiene-based rubbery polymer and a shell formed by graft polymerization of an aromatic vinyl compound and a vinyl cyanide compound onto the core.

The butadiene-based rubbery polymer may have an average particle diameter of 0.2 to 1.0 µm.

The butadiene-based rubbery polymer may be included in an amount of 40 to 70 wt% based on 100 wt% of the (A) butadiene-based rubber-modified aromatic vinyl-vinyl cyanide graft copolymer.

The (A) butadiene-based rubber-modified aromatic vinyl-vinyl cyanide graft copolymer may be an acrylonitrile-butadiene-styrene graft copolymer.

The (B) aromatic vinyl-vinyl cyanide copolymer may have a weight average molecular weight of 70,000 to 300,000 g/mol.

The (B) aromatic vinyl-vinyl cyanide copolymer may include 55 to 80 wt% of a component derived from an aromatic vinyl compound and 20 to 45 wt% of a component derived from a vinyl cyanide compound based on 100 wt% of the (B) aromatic vinyl-vinyl cyanide copolymer.

The (B) aromatic vinyl-vinyl cyanide copolymer may be a styrene-acrylonitrile copolymer.

The (C) oil containing a triglyceride structure may include a structure represented by Chemical Formula 1:

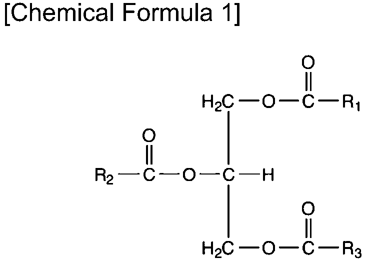

In Chemical Formula 1, R₁, R₂, and R₃ may be the same or different from each other, R₁, R₂, and R₃ may be each a saturated or unsaturated C4 to C30 aliphatic hydrocarbon group, and any carbon in the aliphatic hydrocarbon may be substituted with a hydroxy group.

In Chemical Formula 1, R₁, R₂, and R₃ may be each a saturated or unsaturated C12 to C20 aliphatic hydrocarbon group.

The (C) oil containing a triglyceride structure may include a structure represented by Chemical Formula 2:

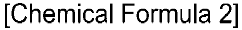

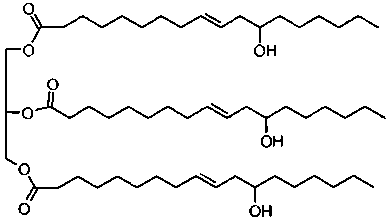

The (C) oil containing a triglyceride structure may be a natural oil.

The (C) oil containing a triglyceride structure may be at least one selected from castor oil, palm oil, soybean oil, canola oil, corn oil, rapeseed oil, sunflower oil, grapeseed oil, safflower oil, cottonseed oil, sesame oil, rice bran oil, palm kernel oil, camellia oil, olive oil, coconut oil, beef tallow, lard, mutton tallow, fish oil, whale oil, tuna oil, and waste oils thereof.

The thermoplastic resin composition may further include at least one additive selected from a nucleating agent, a coupling agent, a filler, a plasticizer, a lubricant, a release agent, an antibacterial agent, a heat stabilizer, an antioxidant, an ultraviolet (UV) stabilizer, a flame retardant, a colorant, and an impact modifier.

According to another embodiment, provided is a molded article manufactured by molding the aforementioned thermoplastic resin composition through a Long Fiber Injection (LFI) process.

### [Advantageous Effects]

The thermoplastic resin composition of an embodiment has excellent heat resistance, fluidity, and impact resistance, and exhibits little change in appearance and physical properties even after undergoing repeated molding processes, so that it is particularly useful for manufacturing a molded article using a Long Fiber Injection process.

### [Brief Description Of The Drawings]

FIG. 1 shows evaluation criteria for the appearance of an extruded sheet after re-extrusion in Experimental Examples.
FIG. 2 shows evaluation criteria for vacuum formability of an extruded sheet after re-extrusion in Experimental Examples.

### [Best Mode]

Hereinafter, embodiments of the present invention are described in detail.

However, these embodiments are exemplary, and this disclosure is not limited thereto and the present invention is defined by the appended claims.

In the present specification, unless otherwise mentioned, "copolymerization" refers to block copolymerization, random copolymerization, or graft copolymerization, and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using dynamic light scattering analysis equipment.

In the present specification, unless otherwise mentioned, the weight average molecular weight is measured by dissolving a powder sample in an appropriate solvent and then performing gel permeation chromatography (GPC) with a 1200 series made by Agilent Technologies Inc. (a standard sample is polystyrene made by Shodex).

According to an embodiment, the thermoplastic resin composition of the present disclosure comprises a base resin comprising (A) 15 to 40 wt% of a butadiene-based rubber-modified aromatic vinyl-vinyl cyanide graft copolymer and (B) 60 to 85 wt% of an aromatic vinyl-vinyl cyanide copolymer, and (C) 0.1 to 3 parts by weight of an oil containing a triglyceride structure, based on 100 parts by weight of the base resin.

Hereinafter, each component of the thermoplastic resin composition is described in detail.

### (A) Butadiene-based rubber-modified aromatic vinyl-vinyl cyanide graft copolymer

In an embodiment, the butadiene-based rubber-modified aromatic vinyl-vinyl cyanide graft copolymer imparts excellent impact resistance to the thermoplastic resin composition.

In an embodiment, the butadiene-based rubber-modified aromatic vinyl-vinyl cyanide graft copolymer may have a core-shell structure comprising a core including a butadiene-based rubbery polymer component and a shell formed by graft polymerizing an aromatic vinyl compound and a vinyl cyanide compound onto the core.

The butadiene-based rubber-modified aromatic vinyl-vinyl cyanide graft copolymer according to an embodiment may be produced by adding an aromatic vinyl compound and a vinyl cyanide compound to a butadiene-based rubbery polymer and graft polymerizing the same through a conventional polymerization method such as emulsion polymerization, bulk polymerization, or the like.

The butadiene-based rubbery polymer may be selected from the group consisting of a butadiene rubbery polymer, a butadiene-styrene rubbery polymer, a butadiene-acrylonitrile rubbery polymer, a butadiene-acrylate rubbery polymer, and a mixture thereof.

The aromatic vinyl compound may be selected from the group consisting of styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from the group consisting of acrylonitrile, methacrylonitrile, fumaronitrile, and a mixture thereof.

The butadiene-based rubbery polymer of the butadiene-based rubber-modified aromatic vinyl-vinyl cyanide graft copolymer may have an average particle diameter of, for example, 0.2 to 1.0 µm, for example, 0.2 to 0.8 µm, or for example, 0.25 to 0.50 µm.

When the above range is satisfied, the thermoplastic resin composition may exhibit excellent impact resistance and appearance characteristics.

Based on 100 wt% of the butadiene-based rubber-modified aromatic vinyl-vinyl cyanide graft copolymer, the butadiene-based rubbery polymer may be comprised in an amount of 40 to 70 wt%, for example, 40 to 60 wt%, or for example, 45 to 60 wt%. Meanwhile, a weight ratio of the aromatic vinyl compound and the vinyl cyanide compound graft-polymerized onto the core composed of the butadiene-based rubbery polymer component may be 6:4 to 8:2.

In an embodiment, the butadiene-based rubber-modified aromatic vinyl-vinyl cyanide graft copolymer may be an acrylonitrile-butadiene-styrene graft copolymer.

The butadiene-based rubber-modified aromatic vinyl-vinyl cyanide graft copolymer may be used in an amount of 15 to 40 wt%, for example, greater than or equal to 15 wt%, greater than or equal to 20 wt%, greater than or equal to 25 wt%, greater than or equal to 30 wt%, or greater than or equal to 35 wt%, and less than or equal to 40 wt%, less than or equal to 35 wt%, less than or equal to 30 wt%, less than or equal to 25 wt%, or less than or equal to 20 wt%, based on 100 wt% of the base resin.

Within the above wt% range, the thermoplastic resin composition may have excellent impact resistance and balance of overall physical properties.

### (B) Aromatic vinyl-vinyl cyanide copolymer

In an embodiment, the aromatic vinyl-vinyl cyanide copolymer may improve overall physical properties of the thermoplastic resin composition.

In an embodiment, the aromatic vinyl-vinyl cyanide copolymer has a weight average molecular weight of greater than or equal to 70,000 g/mol, for example, greater than or equal to 80,000 g/mol, or for example, greater than or equal to 100,000 g/mol, and may be, for example, less than or equal to 300,000 g/mol, or for example, less than or equal to 200,000 g/mol, and for example, may be 70,000 to 300,000 g/mol, or for example, 80,000 to 200,000 g/mol.

In an embodiment, the aromatic vinyl-vinyl cyanide copolymer may be produced from an aromatic vinyl compound and a vinyl cyanide compound through a conventional polymerization method such as emulsion polymerization, suspension polymerization, solution polymerization, or bulk polymerization.

The aromatic vinyl compound may be selected from the group consisting of styrene, α-methylstyrene, p-methylstyrene, p-t-butylstyrene, 2,4-dimethylstyrene, chlorostyrene, vinyltoluene, vinylnaphthalene, and a mixture thereof.

The vinyl cyanide compound may be selected from the group consisting of acrylonitrile, methacrylonitrile, fumaronitrile, and a mixture thereof.

The aromatic vinyl-vinyl cyanide copolymer may comprise greater than or equal to 55 wt%, for example, greater than or equal to 60 wt%, or for example, greater than or equal to 65 wt% of a component derived from the aromatic vinyl compound based on 100 wt%, and may comprise, for example, less than or equal to 80 wt%, or for example, less than or equal to 75 wt%, and for example, may comprise 55 to 80 wt%, or for example, 60 to 75 wt%.

In addition, the aromatic vinyl-vinyl cyanide copolymer may comprise, for example, greater than or equal to 20 wt%, or for example, greater than or equal to 25 wt% of a component derived from the vinyl cyanide compound based on 100 wt%, and may comprise, for example, less than or equal to 45 wt%, or for example, less than or equal to 40 wt%, and for example, may comprise 20 to 45 wt%, or for example, 25 to 40 wt%.

In an embodiment, the aromatic vinyl-vinyl cyanide copolymer may be a styrene-acrylonitrile copolymer (SAN).

In an embodiment, the aromatic vinyl-vinyl cyanide copolymer may be comprised in an amount of 60 to 85 wt%, for example, greater than or equal to 60 wt%, greater than or equal to 65 wt%, greater than or equal to 70 wt%, greater than or equal to 75 wt%, or greater than or equal to 80 wt%, and less than or equal to 85 wt%, less than or equal to 80 wt%, less than or equal to 75 wt%, less than or equal to 70 wt%, or less than or equal to 65 wt%, based on 100 wt% of the base resin.

Within the above wt% range, miscibility of components in the thermoplastic resin composition may be excellent.

### (C) Oil containing a triglyceride structure

In an embodiment, the oil containing a triglyceride structure may impart excellent moldability to the thermoplastic resin composition.

By comprising the oil containing a triglyceride structure in the composition, the present disclosure has effects of providing excellent appearance of an extruded sheet and excellent vacuum formability even after undergoing repeated molding processes without using inorganic substances such as magnesium oxide.

In an embodiment, the oil containing a triglyceride structure may contain a structure represented by the following Chemical Formula 1:

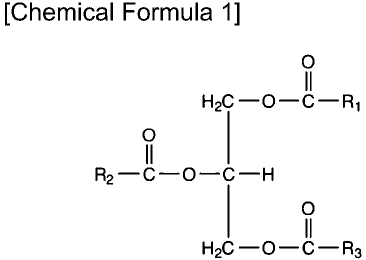

In Chemical Formula 1, R₁, R₂, and R₃ may be the same or different from each other, R₁, R₂, and R₃ may be each a saturated or unsaturated C4 to C30 aliphatic hydrocarbon group, and any carbon in the aliphatic hydrocarbon may be substituted with a common substituent such as a hydroxy group.

In Chemical Formula 1, R₁, R₂, and R₃ may be each a saturated or unsaturated C12 to C20 aliphatic hydrocarbon group.

In an embodiment, the oil containing a triglyceride structure may contain a structure represented by the following Chemical Formula 2:

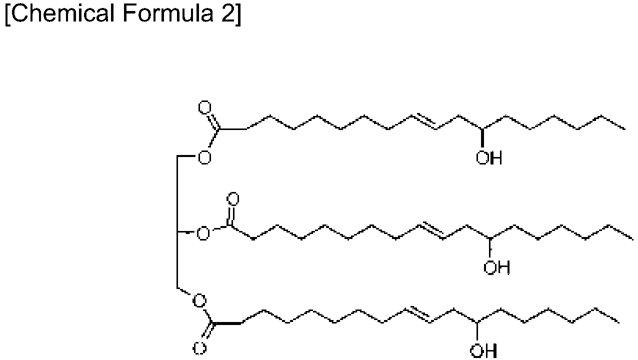

The oil containing a triglyceride structure may be a natural oil or a synthetic oil.

In an embodiment, the oil containing a triglyceride structure may be a natural oil.

In an embodiment, the natural oil may be a vegetable oil or an animal oil.

In an embodiment, the oil containing a triglyceride structure may be at least one selected from castor oil, palm oil, soybean oil, canola oil, corn oil, rapeseed oil, sunflower oil, grapeseed oil, safflower oil, cottonseed oil, sesame oil, rice bran oil, palm kernel oil, camellia oil, olive oil, coconut oil, beef tallow, lard, mutton tallow, fish oil, whale oil, tuna oil, and waste oils thereof.

In an embodiment, the (C) oil containing a triglyceride structure may be castor oil.

The (C) oil containing a triglyceride structure may be comprised in an amount of 0.1 to 3 parts by weight, for example, greater than or equal to 0.1 parts by weight, greater than or equal to 0.3 parts by weight, greater than or equal to 0.5 parts by weight, greater than or equal to 1 part by weight, greater than or equal to 1.5 parts by weight, greater than or equal to 2 parts by weight, or greater than or equal to 2.5 parts by weight, and less than or equal to 3 parts by weight, less than or equal to 2.5 parts by weight, less than or equal to 2 parts by weight, less than or equal to 1.5 parts by weight, less than or equal to 1 part by weight, or less than or equal to 0.5 parts by weight, based on 100 parts by weight of the base resin comprising the components (A) and (B).

Within the above range of parts by weight, the moldability of a thermoplastic resin composition comprising the oil may be more excellent.

### (D) Additive

The thermoplastic resin composition according to an embodiment may, in addition to the components (A) to (C), further comprise one or more additives necessary to balance the properties under conditions of maintaining an excellent balance of physical properties, or depending on the final use of the thermoplastic resin composition.

Specifically, as the additive, a nucleating agent, a coupling agent, a filler, a plasticizer, a lubricant, a release agent, an antibacterial agent, a heat stabilizer, an antioxidant, a UV stabilizer, a flame retardant, a colorant, an impact modifier, and the like may be used, and these may be used alone or in a combination of two or more.

These additives may be appropriately comprised within a range that does not impair the physical properties of the thermoplastic resin composition, and for example, may be comprised in an amount of less than or equal to 20 parts by weight based on 100 parts by weight of the base resin, but is not limited thereto.

The thermoplastic resin composition according to the present disclosure may be manufactured by a known method for manufacturing a thermoplastic resin composition.

For example, the thermoplastic resin composition according to the present disclosure may be prepared in a pellet form by melt-kneading in an extruder after mixing the components of the present disclosure and other additives.

A molded article according to an embodiment of the present disclosure may be manufactured from the aforementioned thermoplastic resin composition by a molding method through a Long Fiber Injection (LFI) process.

In an embodiment, there is provided a molded article manufactured by vacuum-forming an extruded sheet extruded through a sheet extruder using the thermoplastic resin composition in a pellet form as a raw material, or a co-extruded sheet co-extruded through a sheet extruder together with another resin composition, and then processing the same using the LFI process.

The LFI process is a method of manufacturing a molded article having a desired part shape by vacuum-forming an extruded sheet or a co-extruded sheet, and then spraying and molding a mixture of a polyurethane resin and glass fibers on the opposite surface (or inner side) of the molded article, which is not exposed in appearance, in order to impart rigidity. In the manufacture of the extruded sheet or the co-extruded sheet, since the thermoplastic resin composition as a raw material is repeatedly reused, molding through the LFI process is possible only when the thermoplastic resin composition exhibits little change in appearance and physical properties even after undergoing repeated molding processes.

As described above, the thermoplastic resin composition of the present disclosure exhibits little change in appearance and physical properties even after undergoing repeated molding processes, so that molding through the LFI process is possible.

### [Mode for Invention]

Hereinafter, the present disclosure is described in more detail through Examples and Comparative Examples, but the following Examples and Comparative Examples are for the purpose of explanation and are not intended to limit the present disclosure.

### Examples 1 to 3 and Comparative Examples 1 and 2

Thermoplastic resin compositions of Examples 1 to 3 and Comparative Examples 1 and 2 were prepared according to the component content ratios described in Table 1.

In Table 1, (A) and (B) are included in the base resin and are expressed in wt% based on the total weight of the base resin, and (C) and (C') are added to the base resin and are expressed in parts by weight based on 100 parts by weight of the base resin.

The components described in Table 1 were dry-mixed and quantitatively and continuously added to a feed part of a twin-screw extruder with L/D=44 and Φ=45 mm to be melted/kneaded.

Subsequently, the thermoplastic resin composition pellets prepared through the extruder were dried at about 80 °C for about 4 hours, and then specimens for measuring impact resistance and heat resistance were manufactured by injection molding using a 6 oz injection molding machine set at a cylinder temperature of about 230 °C and a mold temperature of about 60 °C.

Meanwhile, for evaluation of extrusion appearance and vacuum formability, the dried thermoplastic resin composition pellets were manufactured in a sheet form having a width of about 300 mm and a thickness of about 2 mm by using a single-screw extruder equipped with a T-die under a barrel temperature condition of about 230 °C.

**(Table 1)**

| | Example | | | Comparative Example | |
|---|---|---|---|---|---|
| | 1 | 2 | 3 | 1 | 2 |
| (A) | 25 | 15 | 40 | 25 | 25 |
| (B) | 75 | 85 | 60 | 75 | 75 |
| (C) | 1 | 0.1 | 3 | - | - |
| (C') | - | - | - | - | 0.1 |

Descriptions of each component described in Table 1 are as follows.

### (A) Butadiene-based rubber-modified aromatic vinyl-vinyl cyanide graft copolymer

An acrylonitrile-butadiene-styrene graft copolymer (Lotte Chemical Corp.) comprising a shell formed by graft-polymerizing acrylonitrile and styrene (acrylonitrile : styrene weight ratio = about 2.5 : about 7.5) onto about 58 wt% of a core composed of a butadiene rubbery polymer (average particle diameter: about 0.25 µm) was used.

### (B) Aromatic vinyl-vinyl cyanide copolymer

A styrene-acrylonitrile copolymer (Lotte Chemical Corp.) copolymerized from a monomer mixture comprising about 32 wt% of acrylonitrile and about 68 wt% of styrene and having a weight average molecular weight of about 120,000 g/mol was used.

### (C) Oil containing a triglyceride structure

Castor oil (Lotte Wellfood Co., Ltd.) was used.

### (C') magnesium oxide

YH150 (Hebei Meishen Technology Co., Ltd.) was used.

### Experimental Examples

The experimental results are shown in Table 2 below.

### (1) Fluidity (unit: g/10min)

The melt flow index (MI) was measured for a sample in a pellet form according to ISO 1133 under conditions of 220 °C and 10 kg.

The melt flow index was also measured under the same conditions for thermoplastic resin composition pellets re-extruded by feeding thermoplastic resin composition pellets manufactured through a twin-screw extruder back into the twin-screw extruder.

### (2) Impact Resistance(unit: kgf·cm/cm)

The notched Izod impact strength of a 1/4"-thick injection-molded specimen was measured according to ASTM D256.

The notched Izod impact strength was also measured under the same conditions for an injection-molded specimen manufactured using thermoplastic resin composition pellets re-extruded by feeding thermoplastic resin composition pellets manufactured through a twin-screw extruder back into the twin-screw extruder.

### (3) Heat Resistance

The Vicat softening temperature (VST) of a 1/4" thick injection-molded specimen was measured under B/50 conditions according to ISO 306.

### (4) Appearance of extruded sheet after re-extrusion

Thermoplastic resin composition pellets manufactured through a twin-screw extruder were fed back into the twin-screw extruder for re-extrusion, and then, the re-extruded thermoplastic resin composition pellets were manufactured into an extruded sheet using a single-screw extruder equipped with a T-die, and the sheet was cut into a size of 300 mm x 300 mm x 2 mm to manufacture a specimen for gloss measurement.

Glossiness of the surface of the specimen for gloss measurement was measured at an angle of 60° at 5 arbitrary locations in the central part using a glossmeter (Micro-gloss glossmeter, BYK Instruments), and the average value was calculated.

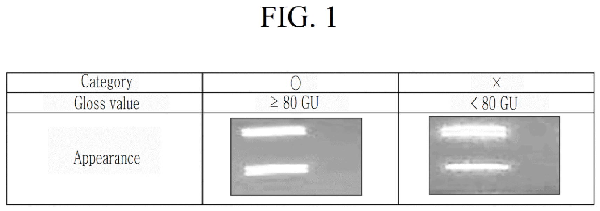

The evaluation criteria for the extrusion appearance are shown in FIG. 1, and the extrusion appearance was marked as ○ when the glossiness measurement value was greater than or equal to 80 GU, indicating excellent glossiness, and the extrusion appearance was marked as × when the glossiness measurement value was less than 80 GU.

### (5) Vacuum formability after re-extrusion

Thermoplastic resin composition pellets manufactured through a twin-screw extruder were fed back into the twin-screw extruder for re-extrusion, and then, the re-extruded thermoplastic resin composition pellets were manufactured into an extruded sheet using a single-screw extruder equipped with a T-die, and the sheet was cut into a size of 300 mm x 300 mm x 2 mm to manufacture a specimen for evaluating vacuum formability.

The specimen for evaluating vacuum formability was heated with a noncontact 400 °C heating plate for 30 seconds, placed in a vacuum mold, subjected to a vacuum state at a pressure of 2 kPa for 12 seconds, and then cooled to room temperature for 6 seconds to evaluate vacuum formability.

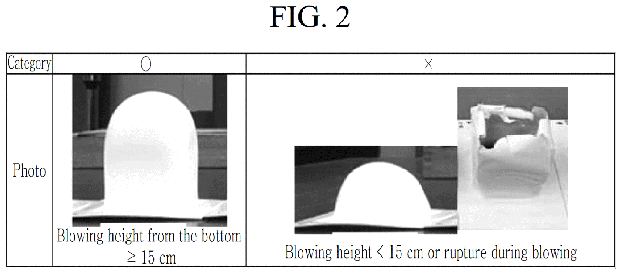

Evaluation criteria for vacuum formability are shown in FIG. 2, and the vacuum formability was marked as ○ when the blowing height from the bottom was greater than or equal to 15 cm, indicating that vacuum forming proceeded excellently, and was marked as × when the blowing height was less than 15 cm or when rupture occurred during vacuum forming.

**(Table 2)**

| | Example | | | Comparative Example | |
|---|---|---|---|---|---|
| | 1 | 2 | 3 | 1 | 2 |
| Initial melt flow index | 4.5 | 5.0 | 4.0 | 4.0 | 4.0 |
| Melt flow index after re-extrusion | 4.5 | 5.0 | 4.0 | 3.0 | 4.0 |
| Initial Izod impact strength | 12 | 11 | 13 | 12 | 12 |
| Izod impact strength after re-extrusion | 12 | 11 | 13 | 6 | 11 |
| VST | 117 | 117 | 116 | 117 | 117 |
| Extruded sheet appearance after re-extrusion | ○ | ○ | ○ | × | × |
| Vacuum formability after re-extrusion | ○ | ○ | ○ | × | ○ |

As can be seen from Table 1 and Table 2, the thermoplastic resin compositions of Examples 1 to 3 showed no degradation in physical properties even after re-extrusion, and both the appearance of the extruded sheet and the vacuum formability after re-extrusion were good.

On the other hand, the thermoplastic resin composition of Comparative Example 1, which did not use the oil containing a triglyceride structure, exhibited degraded physical properties after re-extrusion, and both the appearance of the extruded sheet and the vacuum formability after re-extrusion were not good.

In addition, the thermoplastic resin composition of Comparative Example 2, which used magnesium oxide, showed good physical properties and vacuum formability after re-extrusion, but the appearance of the extruded sheet after re-extrusion was not good.

The present disclosure has been described above with reference to preferred embodiments as set forth herein, but the present disclosure is not limited thereto, and it will be readily understood by those skilled in the art to which the present disclosure pertains that various modifications and variations can be made without departing from the spirit and scope of the disclosure as defined in the following claims.

## Claims

1. A thermoplastic resin composition comprising:
a base resin comprising
(A) 15 to 40 wt% of a butadiene-based rubber-modified aromatic vinyl-vinyl cyanide graft copolymer; and
(B) 60 to 85 wt% of an aromatic vinyl-vinyl cyanide copolymer; and
(C) 0.1 to 3 parts by weight of an oil containing a triglyceride structure, based on 100 parts by weight of the base resin.

2. The thermoplastic resin composition of claim 1, wherein
the (A) butadiene-based rubber-modified aromatic vinyl-vinyl cyanide graft copolymer is of a core-shell structure comprising a core including a butadiene-based rubbery polymer and a shell formed by graft polymerization of an aromatic vinyl compound and a vinyl cyanide compound onto the core.

3. The thermoplastic resin composition according to claim 2, wherein
the butadiene-based rubbery polymer has an average particle diameter of 0.2 to 1.0 µm.

4. The thermoplastic resin composition according to any one of claim 2 or claim 3, wherein
the butadiene-based rubbery polymer is included in an amount of 40 to 70 wt% based on 100 wt% of the (A) butadiene-based rubber-modified aromatic vinyl-vinyl cyanide graft copolymer.

5. The thermoplastic resin composition according to any one of claims 1 to 4, wherein
the (A) butadiene-based rubber-modified aromatic vinyl-vinyl cyanide graft copolymer is an acrylonitrile-butadiene-styrene graft copolymer.

6. The thermoplastic resin composition according to any one of claims 1 to 5, wherein
the (B) aromatic vinyl-vinyl cyanide copolymer has a weight average molecular weight of 70,000 to 300,000 g/mol.

7. The thermoplastic resin composition according to any one of claims 1 to 6, wherein
the (B) aromatic vinyl-vinyl cyanide copolymer comprises 55 to 80 wt% of a component derived from an aromatic vinyl compound and 20 to 45 wt% of a component derived from a vinyl cyanide compound based on 100 wt% of the (B) aromatic vinyl-vinyl cyanide copolymer.

8. The thermoplastic resin composition according to any one of claims 1 to 7, wherein
the (B) aromatic vinyl-vinyl cyanide copolymer is a styrene-acrylonitrile copolymer.

9. The thermoplastic resin composition according to any one of claims 1 to 8, wherein
the (C) oil containing a triglyceride structure comprises a structure represented by Chemical Formula 1: 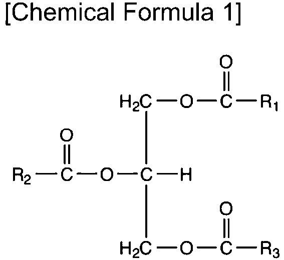
wherein, in Chemical Formula 1,
R₁, R₂, and R₃ are the same as or different from each other,
R₁, R₂, and R₃ are each a saturated or unsaturated C4 to C30 aliphatic hydrocarbon group, and
at least one carbon in the aliphatic hydrocarbon group is optionally substituted with a hydroxy group.

10. The thermoplastic resin composition according to claim 9, wherein
R₁, R₂, and R₃ in Chemical Formula 1 are each a saturated or unsaturated C12 to C20 aliphatic hydrocarbon group.

11. The thermoplastic resin composition according to claim 9 or claim 10, wherein
the (C) oil containing a triglyceride structure comprises a structure represented by Chemical Formula 2:

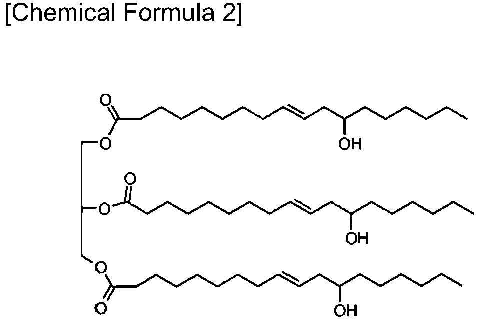

12. The thermoplastic resin composition according to any one of claims 1 to 11, wherein
the (C) oil containing a triglyceride structure is a natural oil.

13. The thermoplastic resin composition according to any one of claims 1 to 12, wherein
the (C) oil containing a triglyceride structure is at least one selected from castor oil, palm oil, soybean oil, canola oil, corn oil, rapeseed oil, sunflower oil, grapeseed oil, safflower oil, cottonseed oil, sesame oil, rice bran oil, palm kernel oil, camellia oil, olive oil, coconut oil, beef tallow, lard, mutton tallow, fish oil, whale oil, tuna oil, and waste oils thereof.

14. The thermoplastic resin composition according to any one of claims 1 to 13,
further comprising at least one additive selected from a nucleating agent, a coupling agent, a filler, a plasticizer, a lubricant, a release agent, an antibacterial agent, a heat stabilizer, an antioxidant, an ultraviolet stabilizer, a flame retardant, a colorant, and an impact modifier.

15. A molded article manufactured by molding the thermoplastic resin composition according to any one of claims 1 to 14 through a Long Fiber Injection (LFI) process.
